# FASCICULE DE BREVET EUROPEEN

(11) **EP 2 705 391 B1**
(45) Date de publication et mention de la délivrance du brevet: **24.08.2016**
(21) Numéro de dépôt: 12725077.7
(22) Date de dépôt: 30.04.2012
(51) Int. Cl.: B05D 5/06, B05D 3/02, C03C 1/00, C03C 17/34, G02B 1/10

(54) **SUBSTRAT TRANSPARENT REVÊTU D'UN EMPILEMENT DE COUCHES MINÉRALES DONT UNE POREUSE RECOUVERTE**
TRANSPARENTE SUBSTRATHÜLLE MIT EINEM STAPEL VON MINERALSCHICHTEN, VON DENEN EINE PORÖS UND BEDECKT IST
TRANSPARENT SUBSTRATE CLAD WITH A STACK OF MINERAL LAYERS ONE OF WHICH IS POROUS AND COVERED

(30) Priorité: 05.05.2011 FR 1153856
(43) Date de publication de la demande: 12.03.2014
(73) Titulaire: Saint-Gobain Glass France, 92400 Courbevoie (FR)
(72) Inventeur: GUILLEMOT, François, 75019 Paris (FR)
(74) Mandataire: Lucas, Francois
(86) Numéro de dépôt international: PCT/FR2012/050965
(87) Numéro de publication internationale: WO 2012/150410

(56) Documents cités:
- EP-A1- 0 871 046
- EP-A1- 1 022 587
- EP-A2- 0 193 269
- WO-A1-03/056366
- FR-A1- 2 934 689

## Description

La présente invention a trait à un substrat transparent revêtu d'un empilement de couches fonctionnelles.

Ces fonctions peuvent être d'ordre optique, telles que réflexion, coloration en réflexion, antireflet, ou thermique telles qu'antisolaire (réflexion du rayonnement solaire), bas-émissif (réflexion du rayonnement thermique de l'intérieur de bâtiments). Il peut s'agir notamment d'un empilement de couches à relativement bas indice de réfraction alternées à des couches à relativement haut indice de réfraction.

Un empilement sur du verre de couches quart-d'onde possédant alternativement un indice de réfraction bas ou haut permet de conférer au verre une réflectivité élevée. En pratique, si le nombre de couches empilées est élevé, la réflectivité du revêtement est de 100 % sur une gamme de longueurs d'onde. Cette gamme de longueurs d'onde est d'autant plus large que le contraste d'indices de réfraction entre les couches est élevé. Ce type d'empilements est généralement désigné sous le nom de miroirs de Bragg (DBR pour Distributed Bragg Reflector en anglais).

Une propriété intéressante de ces empilements réfléchissants est que si le contraste d'indices de réfraction entre les couches est faible, le domaine de longueurs d'onde réfléchies peut devenir plus étroit que la gamme du visible : dans ce cas, le substrat apparaît coloré sans qu'aucun des matériaux composant l'empilement ne le soit.

Ce type d'empilements réfléchissants est utilisé dans le domaine de l'optique de pointe pour réaliser des filtres ou des cavités résonnantes.

On pourrait penser déposer les couches par voie physique (PVD pour Physical Vapor Deposition en anglais) ou par voie liquide en utilisant le procédé sol-gel.

Cependant, les dépôts magnétron (c'est-à-dire par pulvérisation cathodique assistée par magnétron) de couches de silice ou équivalent sont onéreux et longs du fait du caractère isolant électrique de la silice. Les couches ainsi obtenues ont un indice de réfraction non inférieur à 1,3 environ.

D'autre part les dépôts de multicouches par voie sol-gel sont complexes à réaliser du fait des fortes contraintes mécaniques résiduelles en tension dans les couches denses. Ces fortes contraintes mécaniques résiduelles impliquent l'existence d'une épaisseur de couche critique, au-delà de laquelle celle-ci fissure. Par exemple, cette épaisseur vaut environ 400 nm pour une couche sol-gel de silice densifiée à 450 °C. Pour résoudre ce problème, des recuits extrêmement courts à haute température (RTA pour Rapid Thermal Annealing en anglais) sont alors mis en oeuvre. Chaque couche est recuite juste après son dépôt pendant quelques secondes au plus à une température aussi élevée que 900 °C environ. Chaque couche est bien entendu soumise, outre à son traitement thermique propre, à celui ou ceux de la ou des couches la recouvrant éventuellement, de sorte que la durée cumulée de traitement thermique à laquelle est soumise la couche la plus proche du substrat peut atteindre quelques minutes, quatre minutes par exemple, cette durée comprenant des phases de refroidissement. Ces étapes répétées de recuisson sont fastidieuses et difficilement industrialisables.

Les inventeurs ont donc cherché à réaliser sur un substrat transparent en verre ou équivalent, un empilement de couches pouvant varier dans de larges gammes d'épaisseurs et d'indices de réfraction.

Ce but a pu être atteint par l'invention, qui en conséquence a pour objet un substrat transparent revêtu d'un empilement de couches comportant une ou plusieurs couche(s) essentiellement minérale(s) présentant une fraction volumique non nulle d'au plus 74 % de pores de 30 à 100 nm, et une épaisseur minimale d'au moins la dimension des plus grands pores qu'elle contient et, le cas échéant, une ou plusieurs couche(s) essentiellement minérale(s) dense(s) d'épaisseur(s) au plus égale(s) à 400 nm, à condition que deux telles couches denses ne soient pas voisines, et qu'au moins une couche poreuse soit recouverte d'au moins une autre couche.

Au sens de l'invention, le terme empilement implique la présence d'au moins deux couches. Par conséquent, si une seule couche poreuse est présente, au moins une couche dense doit l'être aussi.

On désigne par couche dense une couche essentiellement exempte de porosité.

On adapte aisément la porosité des couches poreuses de manière à leur procurer des indices de réfraction inférieurs à ceux de leur matériau dense, de valeurs aussi faibles que 1,1 dans le cas de la silice, par exemple. Dans cette demande, les indices de réfraction sont donnés à une longueur d'onde de 600 nm.

L'épaisseur des couches denses éventuellement présentes est nécessairement au plus égale à 400 nm, de manière à éviter les fissures provenant des contraintes en tension dans les couches plus épaisses, comme mentionné précédemment.

De plus, conformément à l'invention, deux telles couches denses sont nécessairement séparées par une couche poreuse, de manière à accomoder de manière optimale les contraintes en tension dans l'ensemble de l'empilement.

D'autre part, l'épaisseur de chaque couche dense n'a pas de limite inférieure, et peut être aussi petite que 2 nm.

Les inventeurs ont élaboré un procédé de préparation du substrat muni de son empilement, qui sera vu plus en détail dans la suite, et dans lequel les contraintes en tension subies dans l'ensemble de l'empilement au cours des différentes variations de température, sont compensées par la ou les couches poreuses de telle manière que la formation de fissures est exclue. Les contraintes résiduelles dans les couches poreuses sont faibles, de telle sorte qu'il est possible d'en déposer des couches dont l'épaisseur atteint 1, voire 2 µm sans observer de fissuration.

Selon l'invention, au moins une couche poreuse est recouverte d'au moins une autre couche. Cette configuration est à la fois favorable à l'obtention des fonctionnalités optiques recherchées, et irréalisable par les procédés connus. En particulier, on ne saurait pas en général déposer sur une couche à porosité ouverte déjà formée une autre couche par voie liquide sol-gel, car le précurseur liquide de cette dernière serait au moins en partie absorbé dans la porosité de la couche sous-jacente.

Dans chaque couche poreuse, les pores peuvent être de dimensions différentes, bien que ce ne soit pas préféré. Il doit être noté cependant que la fraction volumique maximale de 74 % est la valeur maximale théorique appliquée à un empilement de sphères de dimension identique, quelle qu'elle soit.

De préférence, les couches poreuse(s) et dense(s) sont constituées de matériaux identiques ou différents choisis parmi SiO₂, TiO₂, Al₂O₃, SnO₂, ZnO, In₂O₃, SiOC seuls ou en mélange de plusieurs d'entre eux.

Pour les propriétés optiques et/ou thermiques, de réflexion, ou antireflet, ou autres que l'on cherche à obtenir, il est connu de mettre en oeuvre des épaisseurs de couches d'un quart ou la moitié des longueurs d'onde considérées. D'une part les longueurs d'onde du visible sont comprises entre 380 et 780 nm environ, d'autre part il est admis que la majeure partie du rayonnement solaire correspond aux longueurs d'onde de 400 à 900 nm environ. A cet effet, l'épaisseur de chaque couche poreuse et de chaque couche dense est de préférence au moins égale à 50 nm, et de préférence au plus égale à 500 nm. Plus précisément, l'épaisseur des couches quart-d'onde est avantageusement comprise entre 70 et 250 nm, et celle des couches demi-onde entre 170 et 480 nm.

De préférence, les pores d'au moins une couche poreuse sont essentiellement tous de dimensions identiques ; cette caractéristique est favorisée par la structuration de cette couche par un latex au cours d'un procédé par voie liquide de type sol-gel.

Avantageusement, l'empilement comprend une ou plusieurs couches d'indice(s) de réfraction relativement élevé(s), alternées avec une ou plusieurs couches d'indice(s) de réfraction relativement faible(s). Cette caractéristique signifie ici simplement que dans un groupe quelconque de trois de ces couches voisines, les deux variations d'indices de réfraction entre deux couches consécutives sont nécessairement de sens contraires (l'une croissante et la suivante décroissante, ou l'inverse). Cette alternance de couches à relativement haut, respectivement bas indice de réfraction, peut comprendre un nombre élevé de couples couche haut indice - couche bas indice, par exemple vingt cinq. Dans un empilement réfléchissant par exemple, plus ce nombre est élevé, plus la réflectivité de l'empilement est proche de 1 (100 %) jusqu'à atteindre pratiquement cette valeur.

De plus, dans cette réalisation, toutes les couches d'indices de réfraction relativement élevés d'une part, faibles d'autre part, sont de préférence constituées du même matériau et ont la même porosité, c'est-à-dire sont de même indice de réfraction.

Commodément la porosité des couches est utilisée pour abaisser l'indice de réfraction par rapport à celui du matériau dense, et les couches poreuses peuvent naturellement constituer des couches d'indices de réfraction relativement faibles; il n'est cependant pas exclu qu'elles constituent des couches d'indices de réfraction relativement élevés. A l'inverse, il n'est pas exclu qu'une couche dense constitue une couche d'indice de réfraction relativement faible. Par exemple une couche de TiO₂ poreuse peut avoir un indice de réfraction supérieur à celui d'une couche de silice dense. A cet égard, il est rappelé que l'empilement du substrat de l'invention comprend au moins une seule couche poreuse et une couche dense, ou deux couches poreuses. Elle peut ne comprendre en tout que des couches poreuses, ou à la fois des couches poreuse(s) et dense(s).

L'invention a également pour objet un procédé de préparation d'un substrat transparent tel que décrit ci-dessus, qui se distingue par le fait qu'il comporte
a) le dépôt successif alterné de premiers films liquides contenant un latex de structuration, précurseurs de premières couches essentiellement minérales poreuses d'une part et de seconds films liquides contenant un latex de structuration, précurseurs de secondes couches essentiellement minérales poreuses, ou ne contenant pas un latex de structuration et précurseurs de secondes couches essentiellement minérales denses d'autre part, et
b) un traitement thermique à au moins 400 °C de densification simultanée de toutes les couches, élimination du latex et structuration des couches poreuses.

Le latex est de préférence acrylique ou styrénique, stabilisé dans l'eau par un tensioactif, notamment anionique.

De manière extrêmement avantageuse, ce procédé permet de déposer une multiplicité de couches par voie liquide, par exemple au moins dix paires de couches de silice poreuse / silice dense, puis de n'effectuer qu'un seul recuit pour toutes ces couches. Il n'y a aucune interpénétration des couches voisines, la porosité n'étant formée que par le recuit. Le latex est éliminé. Aucune fissuration n'apparaît.

Un autre objet de l'invention consiste en l'application d'un substrat transparent comme décrit précédemment pour la réflexion d'un rayonnement lumineux et/ou solaire.

L'invention est maintenant illustrée par l'exemple de réalisation suivant.

### EXEMPLE

### a. - Préparation des couches poreuses

### Sol de silice

Dans un ballon sont introduits 14.2mL (n_{Si} = 6.4.10-2 mol) de tétraéthoxysilane (TEOS), 11.2mL d'éthanol (3n_{Si} mol d'éthanol) et 4.62mL d'une solution d'acide chlorhydrique dans de l'eau désionisée dont le pH vaut 2.5 (4n_{Si} mol d'eau). Le mélange est porté à 60°C pendant 60 min sous agitation.

L'objectif est alors de préparer une solution contenant le précurseur de silice à 2.90 mol/L dans l'eau, en ayant éliminé autant d'éthanol que possible. Pour obtenir la concentration désirée, le volume final de solution doit être 22mL. Après la première étape, le sol contient 7n_{Si} mol d'éthanol (éthanol initial, plus éthanol libéré par l'hydrolyse) ce qui correspond à un volume de 26mL (la densité de l'éthanol vaut 0.79).

Au sol issu de la première étape sont ajoutés 20mL de solution d'acide chlorhydrique dont le pH vaut 2.5. Le mélange est porté sous vide et chauffé légèrement dans un évaporateur rotatif afin d'en retirer l'éthanol. Après cette étape, le volume de solution est ajusté à 22mL avec de la solution d'acide chlorhydrique dont le pH vaut 2.5, et le sol de silice est prêt.

### Mélange précurseur de silice et porogène

En pratique, l'ordre de mélange des composés est déterminé de manière à déstabiliser le moins possible le latex. Pour cela, le latex et le diluant sont mélangés en premier, puis le sol de silice est ajouté. Ceci permet de s'assurer que la concentration en précurseur inorganique « vue » par le latex soit toujours inférieure à la concentration finale. Cette précaution est surtout nécessaire s'il y a présence d'éthanol. En effet, il n'a pas été observé de déstabilisation du latex dans le mélange latex + sol après élimination d'éthanol. En général, les mélanges sont préparés puis déposés dans les heures qui suivent.

Pour réaliser la couche poreuse de l'exemple :
mₛₒₗ (g) 1.88
Mₗₐₜₑₓ (g) 1.75
m_{diluant} (g) 6.37

Latex : particules de PMMA de diamètre 50 nm, et de taux de solide 20.2%, stabilisées en dispersion dans l'eau par un tensioactif anionique tel que le dodécylsulfate de sodium (SDS), un dérivé de celui-ci ou équivalent.
Sol : le sol décrit ci-dessus (Sol de silice), taux de solide 17.4%
Diluant : une solution d'acide chlorhydrique dont le pH vaut 2.5

### Dépôt

Les couches poreuses sont déposées par spin-coating sur verre. Les couches sont déposées par spin-coating à 2000 tours/min pendant 60 s, après que le mélange ait été déposé à la pipette pasteur sur toute la surface du substrat. Cette étape préalable à la rotation doit être réalisée avec précaution afin d'éviter la formation de bulles. Ces bulles, qui se forment très facilement en raison de la grande quantité de tensioactif, sont en général source de défauts lors du dépôt.
Une couche suivante peut être déposée juste après l'arrêt du spin-coater.

L'épaisseur est d'environ 110nm et la fraction volumique de latex vaut 65%.

La calcination est faite à la fin (dans l'exemple c'est une trempe 10min à 650°C, mais ça peut être un recuit 1h30 à 450°C). L'épaisseur n'est pas modifiée au traitement thermique. L'indice de réfraction de cette couche est de 1,17.

### b. - Préparation des couches denses

Couche de silice dense :
Dans un ballon sont introduits 14.2mL (n_{Si} = 6.4.10-2 mol) de tétraéthoxysilane (TEOS), 11.2mL d'éthanol (3n_{Si} mol d'éthanol) et 4.62mL d'une solution d'acide chlorhydrique dans de l'eau désionisée dont le pH vaut 2.5 (4n_{Si} mol d'eau). Le mélange est porté à 60°C pendant 60 min sous agitation.

Le taux de solide est de 14.35%. Il peut être ajusté par dilution avec l'éthanol.

Le dépôt par spin-coating de ce sol permet d'obtenir une couche de silice dense. Pour obtenir une couche de 100nm d'épaisseur, le taux de solide C est de 5%. L'indice de réfraction de cette couche est 1,45.

Couche d'oxyde de titane :
Dans un ballon sont introduits 9mL de tétrabutoxyde de titane et 2.9mL de butanol. Ce mélange est agité pendant 10 minutes pour homogénéisation (les liquides sont visqueux) et stocké à 4°C pendant plusieurs heures.
Dans un autre ballon, 6,5g du mélange précédent et 6,8mL d'acide acétique sont mélangés sous très forte agitation. Le milieu est porté 30 minutes à 50°C puis 1 heure à 0°C.

Enfin, 2.2 mL d'eau désionisée et 9,4mL d'éthanol sont ajoutés au milieu au goutte à goutte à 0°C (dans un bain de glace). Le milieu est enfin porté à 50°C pendant une heure.

Ce sol est déposé par spin-coating à 2000 tours par minute pour obtenir une couche de 90nm d'épaisseur après recuit, dont l'indice de réfraction vaut 2.

### c. - Préparation des empilements

### 1. - SiO₂ poreuse / SiO₂ dense

On dépose successivement comme indiqué ci-dessus un nombre variable de paires de couches SiO₂ poreuse / SiO₂ dense. On effectue un recuit tel que décrit ci-dessus pour dix paires de couches, puis un autre pour la dizaine suivante, et ainsi de suite.

Le nombre de paires de couches sur les différents échantillons est de 1, 2, 5, 15 et 25, pour lesquelles on observe une réflectivité approximative de 0,13, 0,27, 0,63, 0,97 respectivement supérieure à 0,99 pour les longueurs d'onde comprises entre environ 565 et 645 nm.

### 2. - SiO₂ poreuse / TiO₂ dense

On dépose deux paires de couches SiO₂ poreuse / TiO₂ dense. Un seul recuit suffit.

Le substrat transparent ainsi revêtu présente une réflectivité d'au moins 0,1 entre 350 et 780 nm, avec une valeur maximale d'environ 0,69 pour une longueur d'onde de 410 nm.

On observe une coloration bleue sous incidence normale.

## Revendications

1. Substrat transparent revêtu d'un empilement de couches comportant une ou plusieurs couche(s) essentiellement minérale(s) présentant une fraction volumique non nulle d'au plus 74 % de pores de 30 à 100 nm, et une épaisseur minimale d'au moins la dimension des plus grands pores qu'elle contient et, le cas échéant, une ou plusieurs couche(s) essentiellement minérale(s) dense(s) d'épaisseur(s) au plus égale(s) à 400 nm, à condition que deux telles couches denses ne soient pas voisines, et qu'au moins une couche poreuse soit recouverte d'au moins une autre couche.

2. Substrat transparent selon la revendication 1, **caractérisé en ce que** les couches poreuse(s) et dense(s) sont constituées de matériaux identiques ou différents choisis parmi SiO₂, TiO₂, Al₂O₃, SnO₂, ZnO, In₂O₃, SiOC seuls ou en mélange de plusieurs d'entre eux.

3. Substrat transparent selon l'une des revendications précédentes, **caractérisé en ce que** l'épaisseur de chaque couche poreuse et de chaque couche dense est au moins égale à 50 nm.

4. Substrat transparent selon l'une des revendications précédentes, **caractérisé en ce que** l'épaisseur de chaque couche poreuse et de chaque couche dense est au plus égale à 500 nm.

5. Substrat transparent selon l'une des revendications précédentes, **caractérisé en ce que** les pores d'au moins une couche poreuse sont essentiellement tous de dimensions identiques.

6. Substrat transparent selon l'une des revendications précédentes, **caractérisé en ce que** l'empilement comprend une ou plusieurs couches d'indice(s) de réfraction relativement élevé(s), alternées avec une ou plusieurs couches d'indice(s) de réfraction relativement faible(s).

7. Substrat selon la revendication 6, **caractérisé en ce que** toutes les couches d'indices de réfraction relativement élevés d'une part, faibles d'autre part, sont constituées du même matériau et ont la même porosité.

8. Procédé de préparation d'un substrat transparent selon l'une des revendications précédentes, **caractérisé en ce qu'**il comporte
a) le dépôt successif alterné de premiers films liquides contenant un latex de structuration, précurseurs de premières couches essentiellement minérales poreuses d'une part et de seconds films liquides contenant un latex de structuration, précurseurs de secondes couches essentiellement minérales poreuses, ou ne contenant pas un latex de structuration et précurseurs de secondes couches essentiellement minérales denses d'autre part, et
b) un traitement thermique à au moins 400 °C de densification simultanée de toutes les couches, élimination du latex et structuration des couches poreuses.

9. Application d'un substrat transparent selon l'une des revendications 1 à 7 pour la réflexion d'un rayonnement lumineux et/ou solaire.

## Patentansprüche

1. Transparentes Substrat, das mit einem Stapel aus Schichten beschichtet ist, der eine oder mehrere im Wesentlichen mineralische Schicht(en), die einen von Null verschiedenen Volumenanteil von höchstens 74 % Poren von 30 bis 100 nm und eine minimale Dicke von wenigstens der Abmessung der größten Poren, die sie enthält, aufweist/aufweisen, sowie gegebenenfalls eine oder mehrere im Wesentlichen mineralische, dichte Schicht(en) mit (einer) Dicke(n) von höchstens gleich 400 nm umfasst, unter der Voraussetzung, dass zwei solche dichte Schichten nicht benachbart sind und dass wenigstens eine poröse Schicht von wenigstens einer anderen Schicht bedeckt ist.

2. Transparentes Substrat nach Anspruch 1, **dadurch gekennzeichnet, dass** die poröse(n) und dichte(n) Schicht(en) aus identischen oder unterschiedlichen Materialien, die aus SiO₂, TiO₂, Al₂O₃, SnO₂, ZnO, In₂O₃, SiOC, allein oder als Gemisch aus mehreren von ihnen, ausgewählt sind, bestehen.

3. Transparentes Substrat nach einem der vorhergehenden Ansprüche, **dadurch gekennzeichnet, dass** die Dicke einer jeden porösen Schicht und einer jeden dichten Schicht wenigstens gleich 50 nm beträgt.

4. Transparentes Substrat nach einem der vorhergehenden Ansprüche, **dadurch gekennzeichnet, dass** die Dicke einer jeden porösen Schicht und einer jeder dichten Schicht höchstens gleich 500 nm beträgt.

5. Transparentes Substrat nach einem der vorhergehenden Ansprüche, **dadurch gekennzeichnet, dass** die Poren von wenigstens einer porösen Schicht im Wesentlichen alle identische Abmessungen aufweisen.

6. Transparentes Substrat nach einem der vorhergehenden Ansprüche, **dadurch gekennzeichnet, dass** der Stapel eine oder mehrere Schichten mit relativ hohem (hohen) Brechungsindex (Brechungsindizes), die mit einer oder mehreren Schichten mit relativ niedrigem (niedrigen) Brechungsindex (Brechungsindizes) abwechseln, umfasst.

7. Substrat nach Anspruch 6, **dadurch gekennzeichnet, dass** alle Schichten mit einerseits relativ hohen, andererseits niederigen Brechungsindizes aus dem gleichen Material bestehen und die gleiche Porosität haben.

8. Verfahren zur Herstellung eines transparenten Substrats nach einem der vorhergehenden Ansprüche, **dadurch gekennzeichnet, dass** es umfasst
a) das aufeinanderfolgende, abwechselnde Abscheiden von ersten Flüssigfilmen, die einen Strukturierungslatex, Vorläufer von ersten im Wesentlichen mineralischen, porösen Schichten enthalten, auf der einen Seite und von zweiten Flüssigfilmen, die einen Strukturierungslatex, Vorläufer von zweiten im Wesentlichen mineralischen, porösen Schichten enthalten, oder die keinen Strukturierungslatex und Vorläufer von zweiten im Wesentlichen mineralischen, dichten Schichten enthalten, auf der anderen Seite, und
b) eine Wärmebehandlung bei wenigstens 400 °C zum gleichzeitigen Verdichten aller Schichten, Entfernen des Latex und Strukturieren der porösen Schichten.

9. Anwendung eines transparenten Substrats nach einem der Ansprüche 1 bis 7, für die Reflexion einer Licht- und/oder Sonnenstrahlung.

## Claims

1. A transparent substrate coated with a stack of layers comprising one or more essentially inorganic layer(s) exhibiting a nonzero fraction by volume of at most 74% of pores of 30 to 100 nm and a minimum thickness of at least the dimension of the biggest pores which it contains and, if appropriate, one or more essentially inorganic dense layer(s) with thickness (es) at most equal to 400 nm, provided that two such dense layers are not adjacent and that at least one porous layer is covered with at least one other layer.

2. The transparent substrate as claimed in claim 1, **characterized in that** the porous and dense layers are composed of identical or different materials chosen from SiO₂, TiO₂, Al₂O₃, SnO₂, ZnO, In₂O₃ and SiOC, alone or as a mixture of several of them.

3. The transparent substrate as claimed in either of the preceding claims, **characterized in that** the thickness of each porous layer and of each dense layer is at least equal to 50 nm.

4. The transparent substrate as claimed in one of the preceding claims, **characterized in that** the thickness of each porous layer and of each dense layer is at most equal to 500 nm.

5. The transparent substrate as claimed in one of the preceding claims, **characterized in that** the pores of at least one porous layer are essentially all of identical dimensions.

6. The transparent substrate as claimed in one of the preceding claims, **characterized in that** the stack comprises one or more layers with relatively high refractive index/indices, alternating with one or more layers with relatively low refractive index/indices.

7. The substrate as claimed in claim 6, **characterized in that** all the layers with relatively high refractive indices, on the one hand, and with relatively low refractive indices, on the other hand, are composed of the same material and have the same porosity.

8. A process for the preparation of a transparent substrate as claimed in one of the preceding claims, **characterized in that** it comprises:
a) the successive alternating deposition of first liquid films comprising a structuring latex, which are precursors of first essentially inorganic porous layers, on the one hand, and of second liquid films comprising a structuring latex, which are precursors of second essentially inorganic porous layers, or not comprising a structuring latex, which are precursors of second essentially inorganic dense layers, on the other hand, and
b) a heat treatment at at least 400°C for simultaneous densification of all the layers, removal of the latex and structuring of the porous layers.

9. The application of a transparent substrate as claimed in one of claims 1 to 7 for the reflection of a light radiation and/or solar radiation.
